# EUROPÄISCHE PATENTANMELDUNG

(11) **EP 2 390 597 A1**
(43) Veröffentlichungstag der Anmeldung: **30.11.2011**
(21) Anmeldenummer: 10163931.8
(22) Anmeldetag: 26.05.2010
(51) Int. Cl.: F24J 2/52

(54) **Profilschiene, Indachgestell für gerahmte Solarmodule sowie Solarmodulanordnung**

(71) Anmelder: Mounting Systems GmbH, 15834 Rangsdorf (DE)
(72) Erfinder: Hentschel, Matthias, 12161 Berlin (DE); Schnitzer, Sandy, 17258 Feldberger Seenlandschaft (DE)
(74) Vertreter: Eisenführ, Speiser & Partner

(57) **Zusammenfassung**

Profilschiene 100 für die Lagerung gerahmter Solarmodule, die als ineinander stapelbares Strangprofil ausgebildet ist und in einer Querschnittansicht folgendes Profil aufweist:
a) beidseitig eines Mittelkamms 102 erstreckt sich auf einer Abstufung je eine erste Auflagefläche 104, 106 für je einen Solarmodulrahmen beziehungsweise, bei gestapelter Lagerung, für eine andere, gleich ausgebildete Profilschiene 200,
b) an die Auflageflächen 104, 106 schließt sich, bezüglich des Mittelkamms nach außen hin, jeweils eine Profilrinne 108, 110 an.

## Beschreibung

Die vorliegende Erfindung betrifft eine Profilschiene für die Lagerung gerahmter Solarmodule, ein Indachgestell für gerahmte Solarmodule, eine Solarmodulanordnung, sowie ein Schrägdach mit einer Solarmodulanordnung.

Aus dem deutschen Gebrauchsmuster DE 297 10 657 U1 ist eine Solarmodulanordnung mit einem Indachgestell zur Befestigung ungerahmter Photovoltaik-Module oder Solarkollektoren auf einem Schrägdach bekannt. Photovoltaik-Module und Solarkollektoren werden im Rahmen dieser Beschreibung als Ausführungsbeispiele von Solarmodulen verstanden und gelegentlich mit gleicher Bedeutung auch kurz als Module bezeichnet. Der Begriff "Solarmodul" ist hier also - anders als in der DE 297 10 657 U1 - als Oberbegriff für unterschiedliche Typen von Energiewandler-Modulen für Sonnenenergie zu verstehen.

Solarmodulanordnungen mit Indachgestellen bilden am Ort ihrer Installation die Dacheindeckung. Sie müssen daher zusätzlich zur Energieumwandlung die üblichen Funktionen einer Dacheindeckung ausüben, insbesondere eine mindestens ebenso hohe Dichtigkeit gegen Regen- und Schmelzwasser aufweisen.

Das bekannte Indachgestell enthält Profilschienen zur Montage der Solarmodule, die in ihrer Längsrichtung vom Trauf zum Dachfirst verlaufen und mit einem seitlichen Abstand von annähernd einer Modulbreite an der darunterliegenden Dachkonstruktion, also üblicherweise einem Dachstuhl befestigt sind.

Wasserdichtigkeit wird bei der DE 297 10 657 U1 unter anderem durch eine geschindelte Lagerung der Solarmodule erreicht. An den Profilschienen befestigte Modulhaken dienen im Überlappungsbereich der in Richtung vom Dachfirst zum Trauf benachbarten Solarmodule zur Halterung der jeweils oberen Solarmodule an ihrem traufseitigen Ende und übertragen durch ihre mehrfach gebogene, Z-artige Form die an- und aufliegende Last zumindest teilweise in die Dachkonstruktion. In diesem Bereich überragt das Solarmodul die Profilschiene, auf der es montiert ist, in ihrer Längsrichtung. Die Profilschienen weisen beidseitig einer gedachten Mittelebene zwei Auflageflächen für Randstücke ungerahmter Solarmodule auf. Zwischen diesen Auflageflächen ist eine Vertiefung angeordnet, über der ein Spalt frei bleibt.

Die aus der DE 297 10 657 U1 bekannte Vorrichtung eignet sich nicht zur Montage gerahmter Solarmodule. Durch die Verwendung von Rahmen würde die Aufbauhöhe der Solarmodulanlage im Überlappungsbereich der Module stark vergrößert, was unerwünscht ist, da es zu einer Verschattung der Solarmodule untereinander kommen kann und somit der zu erwartende Energieertrag deutlich reduziert wird

Eine aus der DE 20 2007 006154 U1 bekannte Alternativkonstruktionen für gerahmte Solarmodule sieht eine Abdichtung gegen Wasser zwischen den Modulen und der Dachkonstruktion durch ein Wellblech vor. Hierbei bilden die Module nicht die wasserführende Schicht. Das Wasser wird unter den Modulen auf dem Wellblech entlanggeführt. Beim Entfernen eines Moduls bleibt durch das Wellblech die die Dichtigkeit des Daches gewährleistet. Diese Lösung erfordert jedoch einen höheren Montageaufwand.

Das der vorliegenden Erfindung zugrunde liegende technische Problem ist es, eine Profilschiene, wie sie beim Indachsystem der DE 297 10 657 U1 zum Einsatz gelangt, so weiter zu bilden, dass sie sich besser für die Installation gerahmter Solarmodule eignet.

Ein weiteres technisches Problem, das der vorliegenden Erfindung zugrunde liegt, ist es, ein Indachgestell für gerahmte Solarmodule anzugeben, das eine einfacher Montage und zugleich eine hohe Dichtigkeit einer darauf montierten Solarmodulanlage bei geringer Aufbauhöhe vergleichbar zu einer herkömmlichen Dachziegeleindeckung und ohne Verschattung durch die Anordnung der Module ermöglicht entsteht-.

Schließlich ist es ein der vorliegenden Erfindung zugrunde liegendes technisches Problem, eine einfach montierbare Solarmodulanordnung anzugeben, die als Indachsystem ausgebildet ist und eine hohe Dichtigkeit gegen Schmelz- und Regenwasser hat.

Die Erfindung manifestiert sich in mehreren zusammenhängenden Aspekten, die auf einem gemeinsamen Grundgedanken fußen und nachfolgend erläutert werden.

Gemäß einem ersten Aspekt der Erfindung wird das Problem gelöst durch eine Profilschiene, die als ineinander stapelbares Strangprofil ausgebildet ist und die in einer Querschnittansicht folgendes Profil aufweist:
a) beidseitig eines Mittelkamms erstreckt sich auf einer Abstufung je eine erste Auflagefläche für je einen Solarmodulrahmen beziehungsweise, bei gestapelter Lagerung, für eine andere, gleich ausgebildete Profilschiene;
b) an die Auflageflächen schließt sich, bezüglich des Mittelkamms nach außen hin, jeweils eine Profilrinne an.

Die Profilschiene der vorliegenden Erfindung zeichnet sich durch eine neuartige Konstruktion ihres Mittelteils in der Form eines Mittelkamms aus. Der Mittelkamm ermöglicht in einer Solarmodulanordnung mit gerahmten Modulen, die diese Profilschienen verwendet, eine hohe Wasserdichtigkeit. Wasser, das entweder von den Solarmodulrahmen in die Profilschiene fließt oder vom Mittelkamm her innerhalb der Profilschiene abwärts fließt, wird sicher in die Profilrinnen geleitet und kann aufgrund der Stapelbarkeit der Profilschienen bei geschindelter Lagerung abfließen, ohne in die darunter liegende Dachkonstruktion eindringen zu können. Schmelz- und Regenwasser, das nicht über die Solarmodule abfließt wird so sicher vom Dachfirst zur Traufe hin durch die Profilrinnen abgeleitet.

Die erfindungsgemäße Profilschiene ermöglicht durch ihre besonders platzsparende Stapelbarkeit eine Lagerfläche und damit Lagerkosten reduzierende Lagerung nach ihrer Herstellung und vor ihrer Montage. Auch Transportkosten zum Montageort werden aufgrund der platzsparenden Stapelbarkeit verringert.

Nachfolgend werden Ausführungsbeispiele der erfindungsgemäßen Profilschiene beschrieben. Die zusätzlichen Merkmale unterschiedlicher Ausführungsbeispiele können miteinander zur Bildung weiterer Ausführungsbeispiele kombiniert werden.

Die neuartige Konstruktion der Profilschiene im Bereich des Mittelkamms und der Auflageflächen ist vorzugsweise so ausgebildet, dass der Mittelkamm im Querschnitt betrachtet in etwa eine auf den Kopf gestellte U-Form bildet. Alternativ ist auch ein Querschnittsprofil, das die Form eines auf den Kopf gestellten V bildet, möglich. Das U-Profil hat jedoch statische Vorteile. Bei gestapelter Lagerung von Profilschienen ineinander können die Enden der vertikalen U-Balken auf der Kammfläche, also auf dem horizontalen Balken des Mittelkamms der darunterliegenden, gleich ausgebildeten Profilschiene aufliegen.

Die Profilrinnen weisen in bevorzugten Ausführungsformen gestufte Rinnenwände mit Stufenflächen auf jeweils gleicher Höhe über einem Rinnenboden auf. Diese Stufenflächen bilden Auflageflächen für einen Rinnenboden der entsprechenden Profilrinne einer anderen, gleich ausgebildeten zweiten Profilschiene bei gestapelter Lagerung.

Um einerseits eine zusätzliche Führung der ineinander gestapelten Profilschienen in ihrer Längsrichtung zu erzielen und andererseits die oben liegende Profilschiene gegen einen Sog bei einwirkendem Wind vor einem "Abheben" zu sichern, sind in einer Ausführungsform an den Rinnen-Innenwänden im oberen Profilrinnen-Abschnitt oberhalb der Stufenflächen Führungsvorsprünge angeordnet. Entsprechend sind auf der Rinnen-Außenwand eines unteren Profilrinnen-Abschnitts entsprechende Vorsprünge vorhanden, um ein Ineinander-Greifen der unterschiedlichen Vorsprünge in gestapelter Anordnung der Profilschienen zu ermöglichen. Es genügt, diese Führungsvorsprünge auf einer Seite der Profilrinne anzuordnen. Vorzugsweise wird die bezüglich des Mittelkamms weiter außen liegende Rinnenwand hierfür verwendet.

Für eine besonders flächensparende Lagerung und eine besonders flüssigkeitsdichte Gestellkonstruktion ist bei der erfindungsgemäßen Profilschiene vorzugsweise ein Außenmaß eines unteren Profilrinnenabschnittes der Profilrinnen kleiner oder gleich einem Innenmaß eines oberen Profilrinnenabschnitts der Profilrinnen, eine Stufenhöhe zwischen einer Rinnenbodenunterseite und einer Stufenunterseite auf einer Außenseite der Rinnenwand annähernd gleich einem Höhenabstand zwischen der Stufenfläche an der Rinnenwand und der Auflagefläche für den Solarmodulrahmen auf einer Innenseite der Rinnenwand.

Um eine Sogsicherung der zu montierenden gerahmten Solarmodule zu ermöglichen, weist der Mittelkamm in seiner Kammfläche eine oder mehrere Öffnungen auf. In diese können beispielsweise Gewindehülsen oder andere Befestigungsmittel eingeführt werden, was weiter unten näher erläutert wird. Auch der Rinnenboden der Profilrinnen weist bevorzugt Öffnungen auf, mit denen die Profilschienen auf Dachlatten einer Dachkonstruktion befestigt werden können.

Einen weiteren Aspekt der vorliegenden Erfindung bildet ein Indachgestell für gerahmte Solarmodule, das geschindelt gelagerte Profilschienen gemäß dem ersten Aspekt der Erfindung oder einem seiner Ausführungsbeispiele umfasst. Die Profilschienen des Indachgestells verlaufen auf einer darunter liegenden, aber nicht zum Indachgestell gehörenden Dachkonstruktion in einer von einer Traufe zu einem First der Dachkonstruktion, weisenden Längsrichtung, bei einem Dachstuhl also typischerweise parallel zu dessen Sparren. Quer dazu, also in der Abstandsrichtung benachbarter Sparren des Dachstuhls, weisen die Profilschienen des erfindungsgemäßen Indachgestells einen Abstand voneinander auf, der einer Breite der zu lagernden gerahmten Solarmodule entspricht.

Das erfindungsgemäße Indachgestell zeichnet sich dadurch aus, dass es eine Wasserabführung in der Ebene der Solarmodule, nämlich in den Profilrinnen der Profilschiene ermöglicht, ohne dass zusätzliche Abdichtungsmaßnahmen zwischen dem Indachgestell und dem Dachstuhl vorgesehen werden müssen. Es ist damit konstruktiv besonders einfach. Im Übrigen hat das Indachgestell die bereits oben im Zusammenhang mit der erfindungsgemäßen Profilschienen erläuterten Vorteile.

Zur Erzielung einer effektiven Sogsicherung hat das erfindungsgemäße Indachgestell vorzugsweise T-förmige Sogsicherungs-Elemente. Diese sind in einem bevorzugten Ausführungsbeispiel am Mittelkamm der Profilschiene befestigt. Dies kann beispielsweise mit Hilfe einer Öffnung in der Kammfläche des Mittelkamms bewerkstelligt werden. In die Öffnung kann eine Hülse mit einem Innengewinde eingeführt sein, die von der Unterseite des Mittelkamms her gegen Sogwirkung befestigt ist. Diese Hülse kann ein Innengewinde aufweisen, in das ein an der Unterseite der T-förmigen Sogsicherung angeordnetes Schraubbolzenstück eingeschraubt werden kann.

Einen weiteren Aspekt der vorliegenden Erfindung bildet eine Solarmodulanordnung mit einer Vielzahl gerahmter Solarmodule, die auf einem Indachgestell gemäß dem zweiten Aspekt der Erfindung oder einem seiner Ausführungsbeispiele gelagert sind.

Die erfindungsgemäße Solarmodulanordnung teilt die Vorteile des Indachgestells und der Profilschienen, welche oben bereits beschrieben wurden. Bei der erfindungsgemäßen Solarmodulanordnung sind in der Längsrichtung der Profilschienen benachbarte

Die Solarmodule sind bei der erfindungsgemäßen Anordnung bevorzugt nicht geschindelt verbaut, sondern stufenartig aneinanderstoßend montiert. Rahmenoberseiten der benachbarten Solarmodule haben dabei einen nur geringen Höhenabstand voneinander, der dem Höhenabstand entspricht, den die Auflageflächen der Profilschienen voneinander haben, die in dem betreffenden Längsabschnitt, an dem die Solarmodule aneinanderstoßen, geschindelt gelagert sind. Auf diese Weise wird die Aufbauhöhe der Solarmodulanordnung gering gehalten.

Bei dieser Form des Einbaus der Solarmodule entstehende Zwischenräume zwischen den in Längsrichtung der Profilschienen benachbarten Solarmodulen werden vorzugsweise durch eine Dichtung gegen Eindringen von Wasser geschützt. Die Dichtung kann beispielsweise durch ein Blech, ein Gummi oder eine Kombination eines Blechs mit einer Gummidichtung ausgeführt werden. Lasten muss eine solche Dichtung nicht übertragen. Zusätzliche Wind- und Schneelasten sowie die Lasten der gerahmten Solarmodule werden allein über die Tragschienen auf die Unterkonstruktion des Dachstuhls geleitet.

Einen weiteren Aspekt der Erfindung bildet ein Schrägdach mit einem Dachstuhl und einem Indachgestell nach dem zweiten Aspekt der Erfindung oder einem seiner Ausführungsbeispiele, oder mit einer Solarmodulanordnung gemäß dem dritten Aspekt der Erfindung oder einem ihrer Ausführungsbeispiele.

Die Vorteile des erfindungsgemäßen Schrägdachs ergeben sich unmittelbar aus der Beschreibung der oben beschriebenen Aspekte der Erfindung. Das erfindungsgemäße Schrägdach hat eine Solarmodulkonstruktion, die ohne zusätzliche Abdichtung zwischen den Solarmodulen und dem Dachstuhl auskommt und Wasser allein in der Ebene der Solarmodule bzw. den Profilschienen abführt.

Nachfolgend werden weitere Ausführungsbeispiele der Erfindung anhand der beiliegenden Figuren beschrieben. Es zeigen:
- Fig. 1: eine Querschnittsansicht einer Profilschiene nach einem Ausführungsbeispiel der Erfindung;
- Fig. 2: eine Querschnittsansicht zweier geschindelt gelagerter Profilschienen in einem Abschnitt ihrer Überlappung
- Fig. 3: ein Ausführungsbeispiel einer Solarmodulanordnung auf einem Dachstuhl eines Schrägdachs; und
- Fig. 4: ein Detail der Solarmodulanordnung der Fig. 3 in einer Seitenansicht.

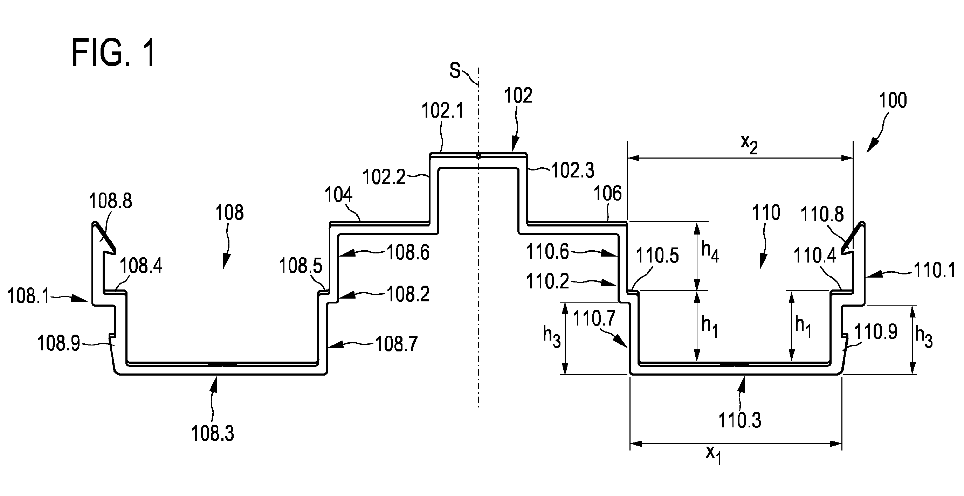

Figur 1 zeigt ein Beispiel einer erfindungsgemäßen Profilschiene 100 in einer Querschnittsansicht. Die Querschnittsansicht der Figur 1 hat eine perspektivische Ansichts-Komponente, beschränkt die perspektivische Ansicht jedoch auf ein kurzes Stück der Profilschiene 100 in ihrer Längsrichtung, um die Übersichtlichkeit zu wahren, ohne wesentliche konstruktive Merkmale fortzulassen.

Die Profilschiene 100 ist spiegelsymmetrisch in Bezug auf eine Symmetrie-Ebene S aufgebaut, die in Figur 1 durch eine gestrichpunktete Linie gekennzeichnet ist und sich in Längsrichtung der Profilschiene 100 fortsetzt. Die Symmetrie-Ebene S verläuft durch einen Mittelkamm 102, dessen Kammfläche 102.1 auf der Oberseite der Profilschiene sich auf beiden Seiten der Symmetrie-Ebene erstreckt. Der Mittelkamm 102 hat die Form eines auf den Kopf gestellten "U". Die genannte Kammfläche 102.1 entspricht also dem horizontalen Balken des "U". Seitliche Wände 102.2 und 102.3 entsprechen den vertikalen Balken des "U". Die seitlichen Wände 102.2 und 102.3 stehen annähernd recht- oder exakt rechtwinklig zur Oberseite des Mittelkamms 102, also zur Kammfläche 102.1. Der Mittelkamm ist nach unten offen.

An die seitlichen Wände 102.2 und 102.3 schließen beidseitig des Mittelkamms parallel zur Kammfläche 102.1 liegende Auflageflächen 104 und 106 an. Die Auflageflächen dienen zur Lagerung von Rahmen seitlich benachbarter Solarmodule (nicht dargestellt). Auf jeder Seite des Mittelkamms ist ein Randstück eines Rahmens eines Solarmoduls zu lagern. Die seitlichen Wände 102.2 und 102.3 dienen hierbei als Anlagefläche für den jeweiligen Rahmen und verhindern ein seitliches Verrutschen des gerahmten Solarmoduls.

An die Auflageflächen 104 und 106 schließen nach außen hin (mit Bezug auf den Mittelkamm 102 bzw. die Symmetrie-Ebene S) Profilrinnen 108 und 110 an. Die Profilrinne 108 auf der linken Seite der Symmetrie-Ebene S wird nachfolgend näher beschrieben. Die hierbei verwendeten Bezugszeichen 108.1 bis 108.10 entsprechen den Bezugszeichen gleicher Teile der Profilrinne 110, die mit 110.1 bis 110.10 gekennzeichnet sind. Auf eine nähere Beschreibung der Struktur der rechten Profilrinne 110 kann der Knappheit halber daher verzichtet werden. Der Übersichtlichkeit der Darstellung in Figur 1 halber sind Maßbezeichnungen nur in der rechten Profilrinne 110 eingezeichnet. Es sei angemerkt, dass die Profilrinnen sich aufgrund der erläuterten Symmetrie des Profils im vorliegenden Ausführungsbeispiel auch in ihren jeweiligen Maßen völlig entsprechen.

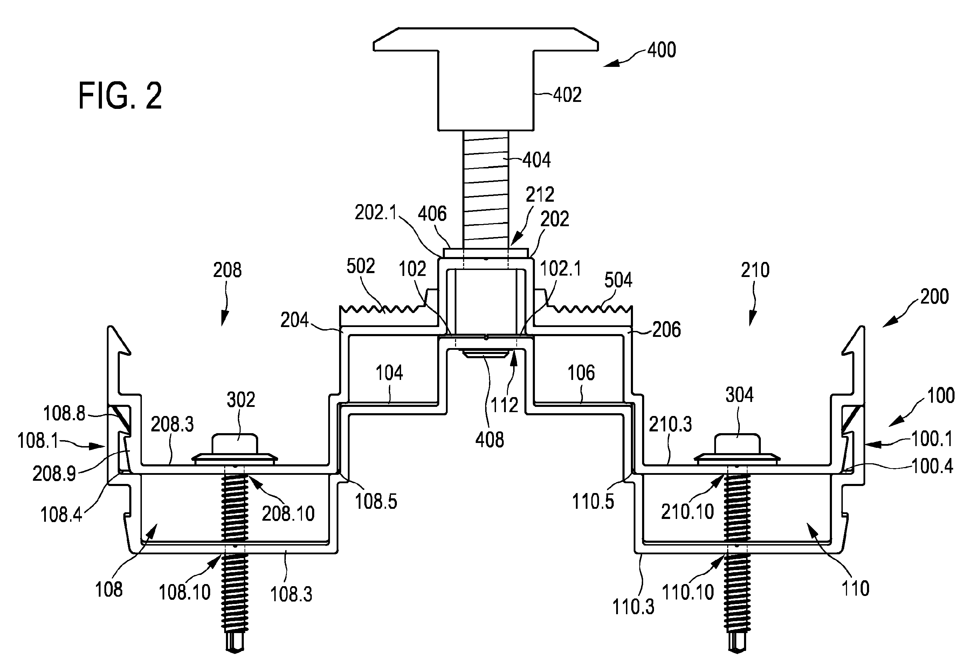

Die linke Profilrinne 108 hat gestufte Rinnenwände 108.1 (außen) und 108.2 (innen). Gegenüber einem Rinnenboden 108.3 haben die Stufenflächen 108.4 und 108.5 an den Rinnenwänden 108.1 und 108.2 dieselbe Höhe h1. Die Stufenflächen 108.4 und 108.5 bilden Auflageflächen für einen Rinnenboden einer entsprechenden Profilrinne, wenn zwei Profilschienen übereinander gelagert werden. Dies wird weiter unten anhand von Figur 2 näher erläutert. Um diese Form der Stapelbarkeit zu ermöglichen sind die Maße der Profilrinnen geeignet gewählt. Insbesondere sollte ein Außenmaß x1 des unteren Profilrinnenabschnitts 108.7 unterhalb der Stufenflächen 108.4, 108.5 kleiner oder gleich einem Innenmaß x2 und eines oberen Profilrinnenabschnitts 108.6 oberhalb der Stufenflächen 108.4, 108.5 sein. Im vorliegenden Ausführungsbeispiel ist ein Unterschied der seitlichen Maße x1 und x2 unter anderem dadurch bedingt, dass auf der Innenseite der äußeren Rinnenwand 108.1 ein Führungsvorsprung 108.8 vorgesehen ist, unter dem sich bis zur Stufenfläche 108.4 ein lichter Raum zur Aufnahme eines entsprechenden Führungvorsprungs 108.9 auf der Außenseite der Rinnenwand 108.1 erstreckt. Daher fällt die linke Stufenfläche 108.4 breiter aus und ist das Innenmaß x2 des oberen Profilabschnitts 108.6 vorliegend größer als das Außenmaß des unteren Profilabschnitts 108.7.

Für die platzsparende Stapelung unterschiedlicher Profilrinnen ineinander ist zusätzlich die Stufenhöhe h3 auf der Außenseite der Rinnenwände annähernd gleich dem Höhenabstand h4 zwischen der näher zum Mittelkamm 102 liegenden Stufenfläche 108.5 und der darüber liegenden Auflagefläche 104.

Die Profilschiene 100 ist als Strangprofil aus Aluminium gefertigt. Ihr zweckgemäßer Einbau in ein Indachgestell und ihre Funktionsweise und Vorteile werden anhand der Beschreibung der nachfolgenden Figuren näher erläutert.

Figur 2 zeigt eine Querschnittsansicht zweier geschindelt gelagerter Profilschienen in dem Abschnitt ihrer Überlappung. Die Querschnittsansicht zeigt also die Profilschiene 100 in einem Längsabschnitt, in dem sie mit einer darüber liegenden Profilschiene 200 ineinander gestapelt ist. Diese geschindelte Lagerung sorgt bei Montage auf einem Schrägdach wie erläutert für einen sicheren Ablauf von Regen- und Schmelzwasser innerhalb der Profilschienen. Die Profilschiene 200 gleicht der Profilschiene 100 weitestgehend. Daher werden für gleiche Teile der beiden Profilschienen hier entsprechende Bezugszeichen verwendet, die sich nur durch die vorgestellte Ziffer 2 bei der Profilschiene 200 anstelle der 1 bei der Profilschiene 100 unterscheiden.

Die obere Profilschiene 200 ist mit ihren Profilrinnen 208 und 210 in die Profilrinnen 108 und 110 der unteren Profilschiene 100 eingeführt. Die Führungsvorsprünge 108.8 und 208.9 greifen ineinander und verhindern aufgrund ihres Formschlusses, dass die obere Profilschiene 200 unter Sogwirkung bei Wind von der unteren Profilschiene abgehoben wird. Zusätzlich wird ist zur Sogsicherung eine gemeinsame Befestigung der Profilschienen 100 und 200 mit Hilfe von Schrauben 302 und 304 vorgesehen. Die Schrauben 302 und 304 erstrecken sich durch Öffnungen 108.10 und 208.10 in den Rinnenböden 108.3 und 208.3 hindurch in eine (nicht dargestellte) Dachkonstruktion hinein.

Die obere Profilschiene 200 stützt sich aufgrund der speziellen Ausformung ihres Profils auf zahlreichen Flächen der unteren Profilschiene ab. Dies ermöglicht eine besonders gut verteilte Durchleitung der Lasten, die ein (hier nicht dargestelltes) gerahmtes Solarmodul mit eventuellen Zusatzlasten durch Schnee oder Wind auf die Profilschienen ausübt. So sind die Auflageflächen 204 und 206 der Profilschiene zum Einen auf der Kammfläche 102.1 der unteren Profilschiene abgestützt und zum Anderen auf den unteren Auflageflächen 104 und 106. Eine weitere Stützung des oberen Rahmens 200 erfolgt in den Profilrinnen 108 und 110, und zwar auf den Stufenflächen 108.4, 108.5 bzw. 110.4, 110.5. Schließlich bieten auch die Oberseiten der nach außen weisenden Rinnenwände 108.1 und 110.1 eine Stützfläche für die obere Profilschiene 200.

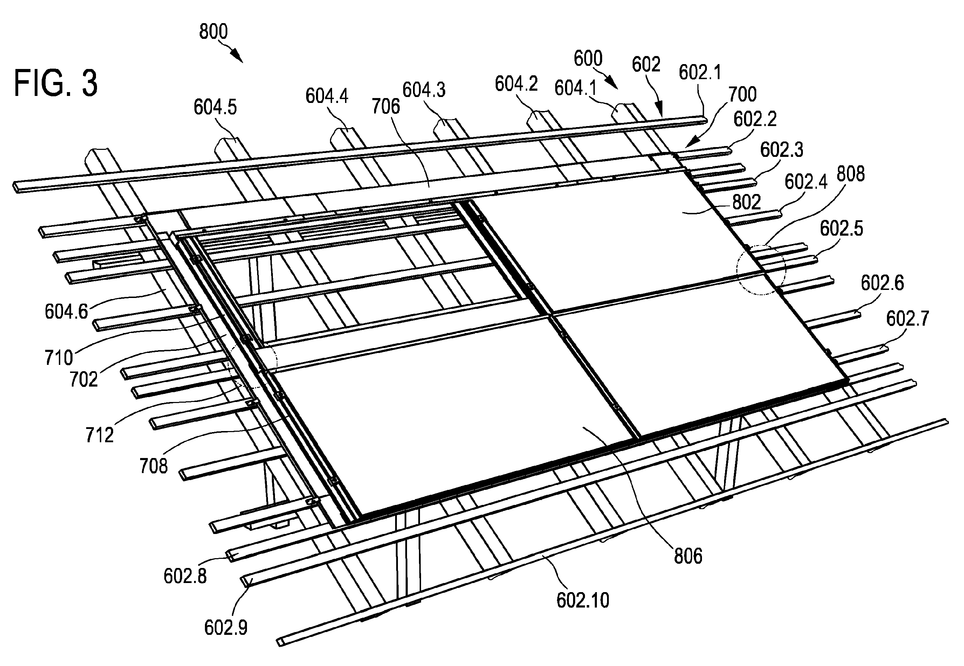

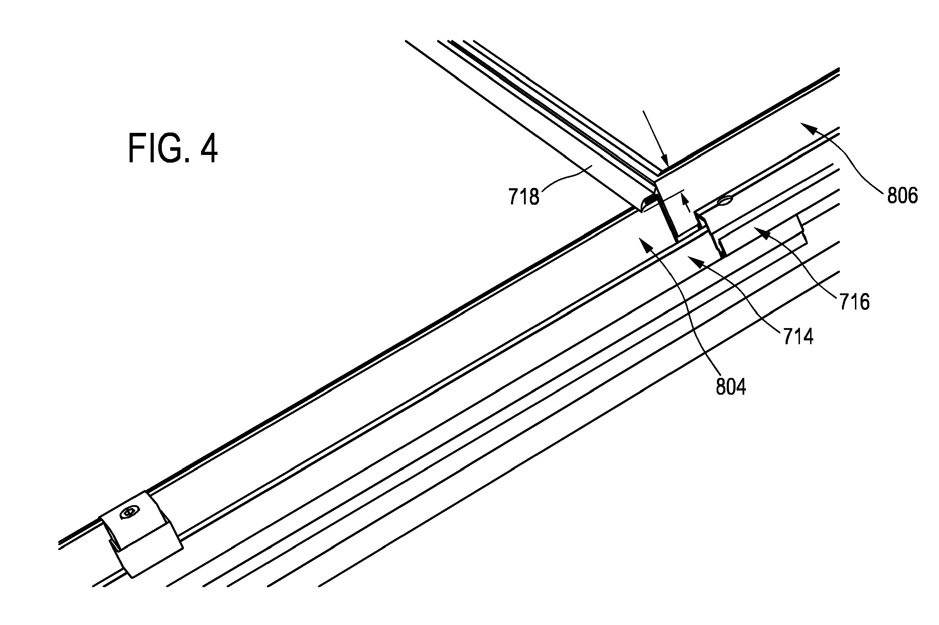

In Figur 2 ist ebenfalls eine Sogsicherung 400 für ein gerahmtes Solarmodul dargestellt. Sogsicherungen - nachfolgend auch Modulhalter genannt - werden an Längsabschnitten der Profilschienen angeordnet, vgl. Fig. 3 und 4. Für die Positionierung maßgebend sind die entsprechenden Vorgaben des Modulherstellers, der in der Regel eine Befestigung jeweils an einem Viertel der Modullänge vorschreibt.

Der Modulhalter 400 wird durch ein im Querschnitt T-förmiges Oberteil 402 in Verbindung mit einem Gewindebolzen 404 an der Unterseite des vertikalen T-Balkens gebildet. Der Gewindebolzen 404 ist in eine Gewindehülse 406 eingeschraubt, die sich durch die Öffnung 212 in der Kammfläche 202 der Profilschiene erstreckt. Bei der Gewindehülse handelt es sich um eine Einnietmutter die ohne weitere Befestigungen ein stabiles und dichtes Gewinde zur Befestigung des Modulhalters darstellt.

Ein alternatives Profil sieht eine Befestigung mit einem Schraubkanal vor, wie er in DE 297 10 657 U1 beschrieben ist.

Ein seitliches Verrutschen der auf der Profilschiene gelagerten Solarmodule wird durch Auflagegummis 502 und 504 verhindert. Diese haben auf ihrer Oberseite ein geriffeltes Profil zur Verstärkung der Sicherung der Solarmodulrahmen gegen seitliches Verrutschen. Darüberhinaus dienen die Auflagegummis 502 und 504 zur und die Riffel im Oberflächenprofil einer Polsterung der Solarmodulrahmen, was insbesondere beim Festziehen der Modulhalter 400 bei der Montage vorteilhaft ist und die Solarmodulrahmen vor Beschädigung schützt.

Figur 3 zeigt eine perspektivische Ansicht eines Indachgestells 700 einer Solarmodulanordnung 800 in einem Montagezustand auf einem Schrägdach 600. Im dargestellten Montagestadium sind drei gerahmte Solarmodule 802, 804 und 806 der Solarmodulanordnung 800 bereits montiert.

Das Schrägdach 600 ist in dieser Darstellung nur ausschnittsweise dargestellt. Das Indachgestell 700 ist auf eine entweder bereits vorhandene oder ergänzte Lattung 602 der Dachkonstruktion montiert. Horizontale Dachlatten 602.1 bis 602.10 sind in Figur 3 dargestellt. Diese sind wiederum auf Sparren 604 befestigt. Nähere Einzelheiten der Dachkonstruktion werden hier nicht näher dargestellt. Das Schrägdach 600 hat eine Neigung, die typischerweise mindestens 16 Grad beträgt, was jedoch nicht als Beschränkung der Anwendbarkeit des vorliegenden Ausführungsbeispiels zu verstehen ist. Für andere Neigungen ist das System ebenso geeignet. Das Indachgestell 700 wird auf dem Schrägdach 600 zur direkten Integration gerahmter Solarmodule in die Dachhaut verwendet, unabhängig von der Art der sonstigen Dacheindeckung. Beim nachträglichen Einbau der Solarmodulanordnung ersetzt das Indachgestell 700 mit den Solarmodulen die bisherige Dacheindeckung am Installationsort. Seitliche und obere Abdeckbleche 702 und 704 sowie ein oberes Abdeckblech 706 des Indachgestell sowie ein in dieser Darstellung nicht sichtbares unteres Abdeckblech ermöglichen einen wasserdichten Übergang zwischen der Solarmodulanordnung und der normalen Dacheindeckung, die in der Darstellung der Figur 3 nicht eingezeichnet ist.

Die Profilschienen des Dachgestells 700 sind geschindelt gelagert. Dies ist in Figur 3 anhand der Profilschienen 708 und 710 dargestellt, die in einem eingekreisten Längsabschnitt (Überlappungsbereich) 712 ineinander eingeführt sind, vgl. auch Figur 2. Die Profilschienen sind länger sind als die auf ihnen gelagerten Solarmodulrahmen. Die Länge, um die die Profilschienen über den Solarmodulrahmen hinausragen, entspricht mindestens der Erstreckung des Überlappungsbereiches 712 in der Längsrichtung der Profilschienen. Um das System an unterschiedlich große Module anpassen zu können kann diese Länge auch größer als die genannte Mindestlänge gewählt werden.

Nachfolgend wird zusätzlich auf Figur 4 Bezug genommen, die eine Seitenansicht der Solarmodulanordnung 800 in einem Bereich 808 zeigt, in dem die beiden in Längsrichtung der Profilschienen benachbarten Solarmodule 802 und 804 aneinanderstoßen. Im Unterschied zu den (in Fig. 3 verdeckten) Profilschienen 714 und 716 des Indachgestells, die im Bereich 808 geschindelt gelagert sind, stoßen die Solarmodulrahmen 804 und 806 hier ohne wechselseitige Überlappung aneinander. Zur Abdichtung der an den Stoßflächen entstehenden Zwischenräumen ist eine Dichtung 718 vorgesehen, die aus einem Gummimaterial oder einer Gummi-Blech-Kombination besteht.

Ein Höhenunterschied zwischen der Oberseite des Solarmodulrahmens 804 und des Solarmodulrahmens 806 entspricht dem in Figur 2 ersichtlichen Höhenabstand der Kammflächen 102.1 und 202.1 voneinander. Dies entspricht dem Höhenabstand, den die Auflageflächen der in dem betreffenden Längsabschnitt ihrer geschindelter Lagerung aufeinander liegenden Profilschienen von einander haben. Auf diese Weise fließt vom Modul 806 nach unten auf das Modul 804 laufendes Regen- oder Schmelzwasser ab, ohne in die Dachkonstruktion eindringen zu können. Die Wasserableitung der seitlich an den von der Traufe zum First verlaufenden Seiten der Solarmodule erfolgt durch die Profilschienen 714 und 716.

## Patentansprüche

1. Profilschiene (100) für die Lagerung gerahmter Solarmodule,
- die als ineinander stapelbares Strangprofil ausgebildet ist und in einer Querschnittansicht folgendes Profil aufweist:
a) beidseitig eines Mittelkamms (102) erstreckt sich auf einer Abstufung je eine erste Auflagefläche (104, 106) für je einen Solarmodulrahmen beziehungsweise, bei gestapelter Lagerung, für eine andere, gleich ausgebildete Profilschiene (200),
b) an die Auflageflächen (104, 106) schließt sich, bezüglich des Mittelkamms nach außen hin, jeweils eine Profilrinne (108, 110) an.

2. Profilschiene nach Anspruch 1, deren Mittelkamm (102) in der Querschnittansicht in etwa eine auf den Kopf gestellte U-Form bildet.

3. Profilschiene nach einem der vorstehenden Ansprüche, bei der die Profilrinnen (108, 110) gestufte Rinnenwände (108.1, 108.2) mit Stufenflächen (108.4, 108.5) auf jeweils gleicher Höhe über einem Rinnenboden (108.3) aufweisen, die Auflageflächen für einen Rinnenboden (210.3) der entsprechenden Profilrinne (210) der anderen, gleich ausgebildeten Profilschiene (200) bilden.

4. Profilschiene nach Anspruch 3, bei der
- ein Außenmaß (x1) eines unteren Profilrinnenabschnittes (110.7) der Profilrinnen kleiner oder gleich einem Innenmaß (x2) eines oberen Profilrinnenabschnitts (110.6) der Profilrinnen ist und
- eine Stufenhöhe (h3) zwischen einer Rinnenbodenunterseite (110.3) und einer Stufenunterseite auf einer Außenseite der Rinnenwand (110.1) annähernd gleich einem Höhenabstand (h4) zwischen der Stufenfläche (110.5) an der Rinnenwand und der Auflagefläche (106) für den Solarmodulrahmen auf einer Innenseite der Rinnenwand ist.

5. Profilschiene nach einem der vorstehenden Ansprüche, deren Mittelkamm (102) in seiner Kammfläche (102.1) eine oder mehrere Öffnungen (112) zur Aufnahme eines Modulhalters (400) für ein gerahmtes Solarmodul aufweist.

6. Indachgestell (700) für gerahmte Solarmodule (802, 804, 806), umfassend:
- geschindelt gelagerte Profilschienen (100, 200) nach einem der Ansprüche 1 bis 5, die auf einem darunter liegenden, nicht zum Indachgestell gehörenden Dachstuhl in einer von einer Traufe zu einem First des Dachstuhls weisenden Längsrichtung verlaufend mit Abstand voneinander senkrecht dazu, der einer Breite der zu lagernden gerahmten Solarmodule entspricht, befestigbar oder befestigt sind.

7. Indachgestell nach Anspruch 6 mit Profilschienen nach Anspruch 5, bei dem in den Öffnungen der Kammfläche des Mittelkamms ein T-förmiger Modulhalter (400) an der jeweiligen Profilschiene (100, 200) befestigt ist.

8. Solarmodulanordnung (800) mit einer Vielzahl gerahmter Solarmodule (802, 804, 806), die auf einem Indachgestell (700) nach Anspruch 6 oder 7 montiert sind.

9. Solarmodulanordnung (800) nach Anspruch 8, bei der in der Längsrichtung der Profilschienen (100, 200) benachbarte Solarmodule (802, 804) stufenartig aneinander stoßend gelagert sind, wobei Rahmenoberseiten der benachbarten Solarmodule einen Höhenabstand voneinander haben, der dem Höhenabstand entspricht, den die Auflageflächen (106, 206) der in dem betreffenden Längsabschnitt ihrer geschindelter Lagerung aufeinander liegenden Profilschienen (100, 200) haben.

10. Solarmodulanordnung nach Anspruch 9, bei dem ein Zwischenraum zwischen den in Längsrichtung der Profilschienen benachbarten Solarmodulen durch eine Dichtung (718) gegen Eindringen von Wasser geschützt ist.

11. Schrägdach (600) mit einem Indachgestell (700) nach Anspruch 6 oder 7 oder mit einer Solarmodulanordnung (800) nach einem der Ansprüche 8 bis 10, das bzw. die auf einem Dachstuhl (602, 604) des Schrägdachs befestigt ist.
